# EUROPEAN PATENT SPECIFICATION

(11) **EP 3 943 982 B1**
(45) Date of publication and mention of the grant of the patent: **07.10.2026**
(21) Application number: 21184389.1
(22) Date of filing: 07.07.2021
(51) Int. Cl.: G01S 19/13, G01S 19/21, G01C 21/00, H04B 7/185, H04H 40/90

(54) **SYSTEM FOR DETECTING SIGNAL SPOOFING BY MONITORING FOR ABNORMAL DIVERGENCE IN PSEUDORANGE VALUES**
SYSTEM ZUR ERKENNUNG VON SIGNALSPOOFING DURCH ÜBERWACHUNG EINER ANORMALEN DIVERGENZ BEI PSEUDOBEREICHSWERTEN
SYSTÈME DE DÉTECTION DE L'USURPATION D'ADRESSE DE SIGNAL PAR SURVEILLANCE DE DIVERGENCE ANORMALE DANS DES VALEURS DE PSEUDO-DISTANCE

(30) Priority: 23.07.2020 US 202016937383
(43) Date of publication of application: 26.01.2022
(73) Proprietor: Honeywell International Inc., Charlotte, NC 28202 (US)
(72) Inventor: MCDONALD, James Arthur, Charlotte, 28202 (US); KEYZER, Karl Abraham, Charlotte, 28202 (US); PRITCHARD, Anthony, Charlotte, 28202 (US)
(74) Representative: Haseltine Lake Kempner LLP

(56) References cited:
- EP-B1- 2 746 813
- US-A1- 2005 234 644
- AHMAD MUKHTAR ET AL: "Impact and Detection of GPS Spoofing and Countermeasures against Spoofing", 2019 2ND INTERNATIONAL CONFERENCE ON COMPUTING, MATHEMATICS AND ENGINEERING TECHNOLOGIES (ICOMET), IEEE, 30 January 2019 (2019-01-30), pages 1 - 8, XP033532443, DOI: 10.1109/ICOMET.2019.8673518
- LIU Y ET AL: "INS-aided GNSS spoofing detection based on two antenna raw measurements", GYROSCOPY AND NAVIGATION, PLEIADES PUBLISHING, MOSCOW, vol. 7, no. 2, 19 May 2016 (2016-05-19), pages 178 - 188, XP035688391, ISSN: 2075-1087, [retrieved on 20160519], DOI: 10.1134/S207510871602005X

## Description

### BACKGROUND

Global Positioning Satellite (GPS) signals are susceptible to jamming and spoofing from earth based sources. Spoofing radio frequency waveforms mimic true signals and are able to overcome weaker (true) signals originating from satellites in space. The spoofing radio frequency waveforms may deny, degrade, disrupt, or deceive operation of a GPS receiver. This can lead to unacceptably large errors in GPS receiver "snapshot" navigation solutions as well as tightly integrated INS/GPS navigation solution errors that may lead to a loss of integrity for of a navigation solution.

Spoofing signals may be generated as a deliberate act or may be an unintentional consequence of a signal generating source. For example, it is common to generate test GPS signals within aircraft maintenance hangars, so technicians providing maintenance on GPS receiver equipment, have reference test signals for the GPS receiver equipment to receive. If a hangar door is left open or the generated GPS test signals are too strong, usually as the result of faulty equipment, the signals may reach out beyond the hangar causing potential spoofing situations in nearby GPS receivers. Ahmad Mukhtar et al "Impact and Detection of GPS Spoofing and Countermeasures against Spoofing," 2019 2nd International Conference on Computing, Mathematics and Engineering Technologies (Icomet), IEEE, 30 January 2019 (2019-01-30), pages 1-8, XP033532433, DOI: 10.1109/ICOMET.2019.8673518. and Liu Y. et al "INS-aided GNSS spoofing detection based on two antenna raw measurements," Gyroscopy and Navigation, Pleiades Publishing Moscow, vol. 7 no. 2, 19 May 2016 (2016-05-19), pages 178-188, XP035688391, ISSN: 2075-1087, DOI: 10.1134/S207510871602005X. disclose satellite signal spoofing detection methods. EP 2746813 B2 relates to the detection of spoofing of GNSS navigation signals. US 2005/234644 A1 relates to a positioning and navigation method and system thereof.

### SUMMARY

The following summary is made by way of example and not by way of limitation. It is merely provided to aid the reader in understanding some of the aspects of the subject matter described. Embodiments provide a divergence monitor system that determines if a GPS signal is being spoofed by monitoring divergences between two sets of pseudorange values in which at least one set of pseudorange values are smoothed with a filter.

The invention is defined by the appended independent claims. Some optional features are defined by the dependent claims.

### BRIEF DESCRIPTION OF THE DRAWINGS

Embodiments can be more easily understood and further advantages and uses thereof will be more readily apparent, when considered in view of the detailed description and the following figures in which:
Figure 1 is a block diagram of a vehicle incorporating a system for detecting signal spoofing by monitoring for abnormal divergence in pseudorange values according to one exemplary embodiment;
Figure 2A is a block diagram a system for detecting signal spoofing by monitoring for abnormal divergence in pseudorange values according to one exemplary embodiment;
Figure 2B is a block diagram of a system for detecting signal spoofing by monitoring for abnormal divergence in pseudorange values according to an example;
Figure 3 is a divergence determining flow diagram according to one exemplary embodiment;
Figure 4 is a spoofing determination flow diagram according to one exemplary embodiment; and
Figure 5 is spoofing determination flow diagram according to another exemplary embodiment.

In accordance with common practice, the various described features are not drawn to scale but are drawn to emphasize specific features relevant to the subject matter described. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the embodiments, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

Embodiments provide a system for detecting signal spoofing by monitoring for abnormal divergence in pseudorange values of satellite signals. The system compares divergences between two sets of generated pseudorange values from received satellite signals. The two sets of generated pseudorange values may be different as the result of at least one set of raw pseudorange values being smoothed by at least one filter as described in detail below. Based on divergences between monitored pseudorange values, spoofing is determined.

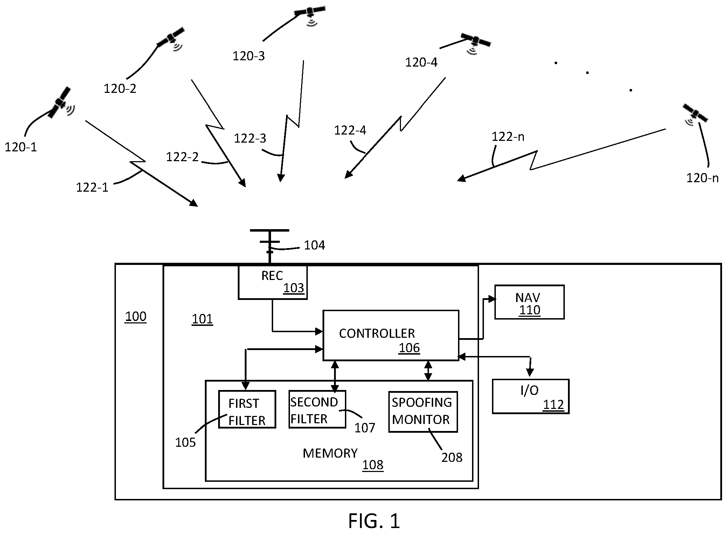

Referring to Figure 1, a vehicle 100 having a system 101 for detecting signal spoofing by monitoring for abnormal divergence in pseudorange measurements of an example embodiment is illustrated. The vehicle may be an avionic aircraft, such as but not limited to a plane or drone, a land based vehicle, such as but not limited to a car or truck, or a water based vehicle such as but not limited to a ship.

The vehicle 100 in this example, includes at least one antenna 104 to detect satellite signals 122-1 through 122-n from satellites 120-1 through 120-n. The satellite signals can generally be identified by 122. Similarly, the satellites can be generally identified by 120. A receiver 103 is in communication with the antenna 104 to receive the detected satellite signals 122. A controller 106, that is communication with the receiver 103, is configured to process the satellite signals 122 from each satellite 120 to determine raw pseudorange values associated satellite with the satellite signals 122 based on instructions stored in memory 108. The raw pseudorange values may be raw pseudorange measurements or a rate of change of the raw pseudorange measurements. A raw pseudorange measurement may be determined by multiplying the speed of light by the time it took for the satellite signal 122 to travel from an associated satellite 120. Since there are many physical effects that occur that may result in synchronization errors between the receiver and satellite clocks, the range determined is a raw pseudorange measurement instead of a true range measurement. The controller 106 may also determine the rate of change of the raw pseudorange measurements when used for the raw pseudorange values. For example, if two consecutive pseudorange measurements are determine as 20,000,000 m and 20,000,100 m over one second, the controller 106 would determine the raw pseudorange value to be (200,000,100 - 20,000,000)/1=100 m/s.

In general, the controller 106 may include any one or more of a processor, microprocessor, a digital signal processor (DSP), an application specific integrated circuit (ASIC), a field program gate array (FPGA), or equivalent discrete or integrated logic circuitry. In some example embodiments, controller 106 may include multiple components, such as any combination of one or more microprocessors, one or more controllers, one or more DSPs, one or more ASICs, one or more FPGAs, as well as other discrete or integrated logic circuitry. The functions attributed to the controller 106 herein may be embodied as software, firmware, hardware or any combination thereof. The controller 106 may be part of a system controller or a component controller, such as but not limited to, the receiver controller. The memory 108 may include computer-readable operating instructions that, when executed by the controller provides functions for a system for detecting signal spoofing by monitoring for abnormal divergence in pseudorange values. Such functions may include the code for functions of determining raw pseudorange values, filtering the raw pseudorange values (first and second filters 105 and 107), monitoring for divergence between two sets of pseudorange values and determining if spoofing is present based on monitored divergences. The computer readable instructions may be encoded within the memory 108. Memory 108 is an appropriate non-transitory storage medium or media including any volatile, nonvolatile, magnetic, optical, or electrical media, such as, but not limited to, a random access memory (RAM), read-only memory (ROM), non-volatile RAM (NVRAM), electrically-erasable programmable ROM (EEPROM), flash memory, or any other storage medium.

As discussed above, the controller 106 is configured to determine raw pseudorange values from the satellite signals 122. In one embodiment, the controller 106 is configured to apply a first slow filter 105 to the raw pseudorange values and a second fast filter 107 to the raw pseudorange values. In this example, the first filter 105 and the second filter 107 are digital filters applied to the raw pseudorange values via instructions saved in the memory 108. The first filter 105 in an example uses a first time constant that is slower than a time constant used in the second filter 107. The controller 106 is configured, based on the instructions stored in memory 108, to monitor divergences between two different sets of smoothed pseudorange values output from the first and second filters 105 and 107 associated with a satellite signal 122.

The first filter 105 with the slow, or longer, time constant, will filter out (smooth out) most of the noise. The second filter 107, with the fast or shorter time constant, allows most noise determined in the raw pseudorange values to pass through in the filtered (or smoothed) pseudorange values. Essentially, an output of smoothed pseudorange values from the first filter 105, with the slower time constant, retains more memory of the past true satellite signal than the second filter 107 with the faster time constant. As a spoofing signal starts, the first filter 105, with the slower time constant, outputs smoothed pseudorange values that are based not only on the recently received spoofing signal but also the past true satellite signals while the second filter, with the fast time constant, outputs smoothed pseudorange values that is more based on the recently received spoofing signal than the past true satellite signals. This difference in the outputs of the filters 105 and 107 allows for the detection of a spoofing signal with a spoofing monitor 208. As discussed below in detail, the controller 106 is configured to monitor the smoothed pseudorange measurements outputs of the filters 107 and 105 to determine divergences that may indicate a spoofing signal is present. In other embodiments, as discussed below, only one filter is used. In this embodiment an output of the filter is compared with the raw pseudorange values.

Further illustrated in Figure 1 is an input/output 112 which provides a communication link between an operator and the controller 106. The input/output may include an information input device, such as but not limited to, a keyboard and an output device, such as, but not limited to, a display. Also illustrated in this example embodiment is a navigation system 110 that is in communication with the controller 106. The navigation system 110 may include navigation controls used to control the steering of the vehicle 100. The navigation system 110 further may include a location system that uses the pseudorange measurements determined by the controller to determine a location of the vehicle 100. In one embodiment, controller 106 is configured to determine location information and then pass it on the navigation system 110. In some embodiments the controller is configured to control the navigation system 110 based at least in part on detected spoofing associated with a satellite signal 122. The control of the navigation system 110 may include, but is not limited to, removing a satellite signal 122 associated with a detected spoofing signal from a location determination and providing a spoofing alert to an operator via display in the input/output 112 or the navigation system 110. The alarm may provide the operator with information regarding the integrity of a determined location.

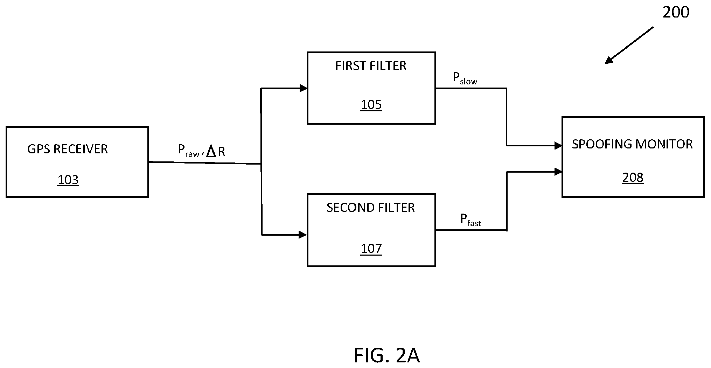

An example of a system 200 for detecting signal spoofing by monitoring for abnormal divergence in pseudorange values is illustrated in Figure 2A. In this example, GPS receiver 103 receives a raw pseudorange value P_{raw} and a corresponding delta range measurement ΔR in an embodiment that outputs raw pseudorange measurements. In an embodiment where the raw pseudorange value P_{raw} is a rate of change of the pseudorange measurement (pseudorange rate) a delta rage ΔR may not be used for smoothing.

A delta range ΔR is carrier or phase-based information contained in satellite signal 122 that may be used in a filter to smooth a pseudorange to a more accurate measurement when the raw pseudorange P_{raw} measurement is used. The raw pseudorange measurement P_{raw} and delta range measurement ΔR are passed to both the first filter 105 and the second filter 107 in this example embodiment. As discussed above, the first filter 105 is the slow filter (has a slow time constant) and the second filter 107 is the fast filter (has a fast time constant). In an embodiment, the first filter 105 and the second filter 107 are digital filters implemented by the controller 106 using equations stored in memory 108. An example equation implemented by the controller 106 for the first filter 105 includes:
${P}_{slow} \left(n\right) = \frac{Δ t}{{τ}_{slow}} {P}_{raw} + \left(1-\frac{Δ t}{{τ}_{slow}}\right) \left({P}_{slow}\left(n-1\right)+ΔR\right)$

An example equation implemented by the controller 106 for the second filter 107 includes:
${P}_{fast} \left(n\right) = \frac{Δ t}{{τ}_{fast}} {P}_{raw} + \left(1-\frac{Δ t}{{τ}_{fast}}\right) \left({P}_{fast}\left(n-1\right)+ΔR\right)$
Where *P_{slow}* = smoothed pseudorange (slow time constant).
Where *P_{fast}* = smoothed pseudorange (fast time constant).
Where Δ*t* = Sample time, which may be in example, approximately 1 second
Where n = current epoch
Where n - 1 = previous epoch
Where *τ_{slow}* = a slow time, for example approximately 100 seconds
Where *τ_{fast}* = a fast time, for example approximately 10 seconds.

The times provided above are merely provided as examples. Any time values can be used that accomplish a divergence when a spoofing signal is present. In one embodiment, spoofing is determined with a spoofing monitor 208 with the controller 106 implementing instructions stored in the memory 108. In this example, the spoofing monitor determines if a divergence between *P_{slow}* and *P_{fast}* reaches or is greater than a threshold. For example, if |*P_{slow} - P_{fast}* | > 30m, possible spoofing is present.

In another embodiment, spoofing is determined with the spoofing monitor 208 by monitoring the rate of change of the divergence (or difference) in the filtered (or smoothed) pseudorange measurements. For example, the controller may implement the following equation:
${dPRate}_{slow , fast} \left(n\right) = \frac{{dP}_{slow , fast} \left(n\right) - {dP}_{slow , fast} \left(n-k\right)}{k Δ t}$
$Where {dP}_{slow , fast} \left(n\right) = {P}_{slow} \left(n\right) - {P}_{fast} \left(n\right) .$

Further where *k* is the number of samples over which to compute the rate and Δ*t* is the time interval between samples. In practice the quantity *k*Δ*t* may be in the order of 20 seconds. The rate change monitor implemented by the controller 106 may be:

If |*dPRate_{slow},_{fast}*| > 1 m/s, then possible spoofing is present. The use of 1 m/s is just one possible value.

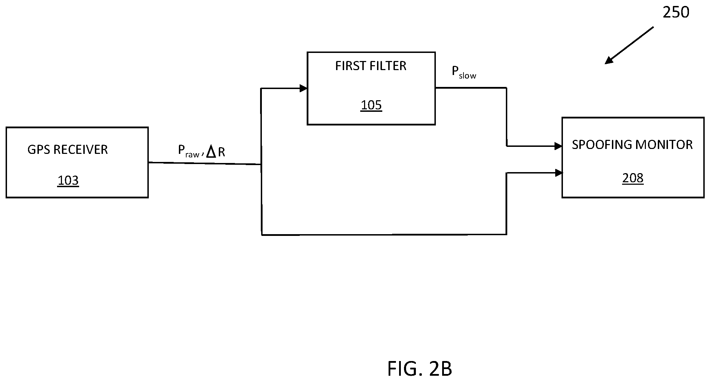

The above example embodiments effectively exploit the divergence of raw (or "fast") pseudorange measurements from carrier smoothed (or slow) pseudorange measurements using a first and second filter 105 and 107. Figure 2B illustrates a block diagram of another system 250 for detecting signal spoofing by monitoring for abnormal divergence in pseudorange values. In this example, only one filter 105 is used. The raw pseudorange values from the GPS receiver 103 are communicated to filter 105 and an input to the spoofing monitor 208. An output of filter 105 is communicated to another input of the spoofing monitor 208. Since the raw pseudorange values are basically a single sample average and the smoothed pseudorange values output from the filter 105 are an average that is based not only on the recently received spoofing signal but also the past true satellite signals, divergences between the two sets of pseudorange values will occur. The spoofing monitor 208 monitors for divergences in the pseudorange values. In embodiments described above, either an output of a fast filter or even the raw pseudorange values are compared with outputs of a slow filter. An example of a slow filter is a filter with around a 100s time constant.

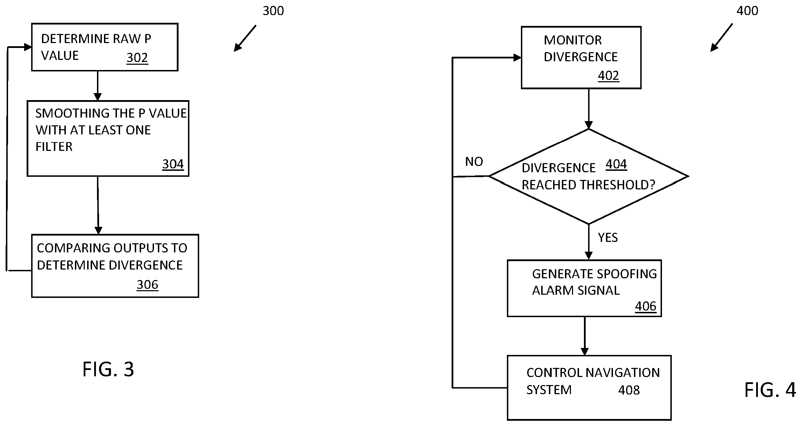

Figures 3 through 5 illustrated different flow diagrams 300, 400 and 500 that correlate to the divergence and spoofing determining processes described above. The flow diagrams 300, 400 and 500 are provided as a series of sequential blocks. The sequence of the blocks may be different or may run parallel with each other in other embodiments. Hence, embodiments are not limited to the sequence of blocks illustrated in flow diagrams 300, 400 and 500.

Referring to Figure 3, a divergence determining flow diagram 300 according to one exemplary embodiment is illustrated. In this example embodiment, the process starts by determining raw pseudorange values from received satellite signals 122, at block (302). The process continues at block (304) by filtering or smoothing out the raw pseudorange values with at least one filter. Outputs of the filtering are monitored at block (306) to determine divergences. Some, embodiments compare two different pseudorange values, that are determined with different filter properties, such as different time constant or sampling rates, so differences that may result from spoofing (because one set of values will be more susceptible to the spoofing signal information) can be identified. In another embodiment, the raw pseudorange values, may be compared to filtered pseudorange values.

An example of a spoofing determination flow diagram 400 according to one embodiment is illustrated in Figure 4. In this example, the process starts at block (402) monitoring for divergence between two different pseudorange values. As discussed above, the two different pseudorange values, may come from an output of two different filters having different filtering properties or may come from the raw pseudorange values and the output of one filter. In block (404) it is determined if a divergence has reached threshold. If the divergence has not reached the threshold at block (404), the process continues at block (402) monitoring for divergences. If it is determined at block (404) the divergence has reached the threshold, this embodiment generates a spoofing alarm signal at block (406). In one example embodiment, the spoofing alarm signal is used, a least in part, in the control of a navigation system of the vehicle at block (408). This may include, but is not limited to, providing a warning to an operator of the vehicle, removing pseudorange measurements associated with detected spoofing when determining vehicle location and controlling at least in part navigation of the vehicle.

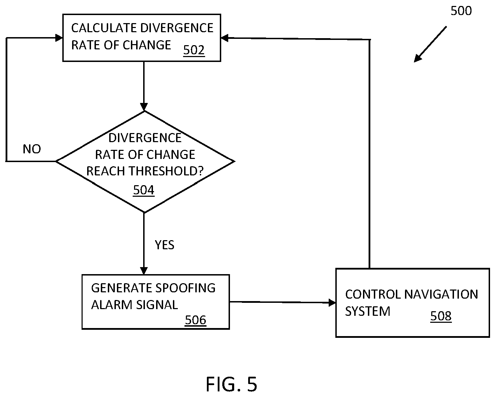

Another, spoofing determination flow diagram 500 according to one embodiment is illustrated in Figure 5. In this embodiment, the process starts at block (502) by monitoring for divergence in the pseudorange values in an embodiment. As discussed above, the two different pseudorange values, may come from an output of two different filters each having different filtering properties or may come from the raw pseudorange values, and the output of one filter. In this embodiment, it is determined if a rate of change in the divergence is greater than a threshold at block (504). If the rate of change is not above the threshold at block (504), the process continues at block (502) monitoring the divergence. If, however, the rate of change has reached the threshold at block (504), a spoofing alarm signal is generated at block (506). As with the embodiment described above, the spoofing alarm signal may be used to at least in part control a navigation system of the vehicle 100 at block (508). The process then continues at block (502) monitoring for divergence.

Although specific embodiments have been illustrated and described herein, it will be appreciated by those of ordinary skill in the art that any arrangement, which is calculated to achieve the same purpose, may be substituted for the specific embodiment shown provided that the arrangement remains within the scope of the claims. This application is intended to cover any adaptations or variations of the present invention that are within the scope of the claims. Therefore, it is manifestly intended that this invention be limited only by the claims.

## Claims

1. A system (101, 200, 250) for detecting satellite signal spoofing by monitoring abnormal divergence in pseudorange measurements, the system (101, 200, 250) comprising:
at least one antenna (104) configured to detect satellite signals (122) from a plurality of satellites (120);
at least one receiver (103) in communication with the at least one antenna (104) to receive the detected satellite signals (122); and
a controller (106) in communication with the at least one receiver (103), the controller (103) configured to:
determine raw pseudorange measurements from the received satellite signals (122),
apply a first filter (105) on the raw pseudorange measurements to generate an output of first filtered pseudorange measurements,
apply a second filter on the raw pseudorange measurements to generate an output of second filtered pseudorange measurements,
compare the output of the first filtered pseudorange measurements with the output of the second filtered pseudorange measurements, and
determine if spoofing is present in the received satellite signals (122) based on a determined divergence between the output of first filtered pseudorange measurements and the output of second filtered pseudorange measurements;
wherein the second filter (107) has different filtering properties than the first filter (105).

2. The system (200) of claim 1, further wherein the different filtering properties includes one of different time constants and different sample rates.

3. The system (200) of claim 1, further wherein the at least one of the first filter (105) and the second filter (107) is configured to smooth the raw pseudorange measurements with a delta range.

4. The system (200) of claim 1, wherein at least one of the first and second filters (105 and 107) is an electronic filter.

5. The system (200, 250) of claim 1, further comprising:
a memory (108) to at least store operating instructions, the controller (106) in communication with the memory (108) to implement the operating instructions;
an input/output (122) in communication with the controller (106), the input/output (112) providing a communication link between an operator and the controller (106); and
a navigation system (110) configured to provide navigation functions of a vehicle (100) based at least in part on a determination by the controller (106) if spoofing is present.

6. A method of determining if received satellite signals are being spoofed, the method comprising:
determining raw pseudorange measurements from received satellite signals (122);
communicating the raw pseudorange measurements to a first path and a second path;
smoothing the raw pseudorange measurements with a filter (105) in at least one of the first and second paths; and
determining if spoofing is occurring based on a detected divergence between outputs in the first and second paths;
wherein smoothing the pseudorange measurements in at least one of the first and second paths further comprises:
filtering the pseudorange measurements in the first path with a first filter having a first filtering property to determine first smoothed range measurements and filtering the pseudorange measurements in the second path with a second filter (107)with a second filter property to determine second smoothed pseudorange measurements, wherein the second filter property is different than the first filter property; and
wherein determining spoofing is occurring further comprises:
comparing detected divergence differences between the output in the first path and the output in a second path against a predetermined threshold that indicates spoofing is present.

7. The method of claim 6, wherein determining spoofing is occurring further comprises:
determining a rate of change of the divergence; and
comparing the rate of change of the divergence to a predetermined rate of change that indicates spoofing is present.

## Patentansprüche

1. System (101, 200, 250) zu Detektieren von Satellitensignal-Spoofing durch Überwachen von ungewöhnlichen Abweichungen in Pseudoentfernungsmessungen, das System (101, 200, 250) umfassend:
mindestens eine Antenne (104), die dazu konfiguriert ist, Satellitensignale (122) von einer Vielzahl von Satelliten (120) zu detektieren;
mindestens einen Empfänger (103) in Kommunikation mit der mindestens einen Antenne (104), um die detektierten Satellitensignale (122) zu empfangen; und
eine Steuerung (106) in Kommunikation mit dem mindestens einen Empfänger (103), wobei die Steuerung (103) dazu konfiguriert ist:
Roh-Pseudoentfernungsmessungen aus den empfangenen Satellitensignalen (122) zu bestimmen,
einen ersten Filter (105) auf die Roh-Pseudoentfernungsmessungen anzuwenden, um eine Ausgabe von ersten gefilterten Pseudoentfernungsmessungen zu erzeugen,
einen zweiten Filter auf die Roh-Pseudoentfernungsmessungen anzuwenden, um eine Ausgabe von zweiten gefilterten Pseudoentfernungsmessungen zu erzeugen,
die Ausgabe der ersten gefilterten Pseudoentfernungsmessungen mit der Ausgabe der zweiten gefilterten Pseudoentfernungsmessungen zu vergleichen, und
zu bestimmen, ob Spoofing in den empfangenen Satellitensignalen (122) vorliegt, auf Basis einer bestimmten Abweichung zwischen der Ausgabe von ersten gefilterten Pseudoentfernungsmessungen und der Ausgabe von zweiten gefilterten Pseudoentfernungsmessungen;
wobei der zweite Filter (107) unterschiedliche Filtereigenschaften zu dem ersten Filter (105) aufweist.

2. System (200) nach Anspruch 1, wobei ferner die unterschiedlichen Filtereigenschaften eines von unterschiedlichen Zeitkonstanten und unterschiedlichen Abtastraten beinhalten.

3. System (200) nach Anspruch 1, wobei ferner der mindestens eine von dem ersten Filter (105) und dem zweiten Filter (107) dazu konfiguriert ist, die Roh-Pseudoentfernungsmessungen mit einer Deltaentfernung zu glätten.

4. System (200) nach Anspruch 1, wobei mindestens einer von dem ersten Filter und dem zweiten Filter (105 und 107) ein elektronischer Filter ist.

5. System (200, 250) nach Anspruch 1, ferner umfassend:
einen Speicher (108), um mindestens Betriebsanweisungen zu speichern, wobei die Steuerung (106) in Kommunikation mit dem Speicher (108) ist, um die Betriebsanweisungen zu implementieren;
eine Eingabe/Ausgabe (122) in Kommunikation mit der Steuerung (106), wobei die Eingabe/Ausgabe (112) eine Kommunikationsverbindung zwischen einem Bediener und der Steuerung (106) bereitstellt; und
ein Navigationssystem (110), das dazu konfiguriert ist, Navigationsfunktionen eines Fahrzeugs (100) mindestens teilweise auf Basis einer Bestimmung durch die Steuerung (106), ob Spoofing vorliegt, bereitzustellen.

6. Verfahren zum Bestimmen, ob empfangene Satellitensignale gespooft werden, das Verfahren umfassend:
Bestimmen von Roh-Pseudoentfernungsmessungen aus den empfangenen Satellitensignalen (122);
Kommunizieren der Roh-Pseudoentfernungsmessungen an einen ersten Pfad und einen zweiten Pfad;
Glätten der Roh-Pseudoentfernungsmessungen mit einem Filter (105) in mindestens einem von dem ersten und dem zweiten Pfad; und
Bestimmen, ob Spoofing auftritt, auf Basis einer detektierten Abweichung zwischen Ausgaben in dem ersten und dem zweiten Pfad;
wobei das Glätten der Pseudoentfernungsmessungen in mindestens einem von dem ersten und dem zweiten Pfad ferner Folgendes umfasst:
Filtern der Pseudoentfernungsmessungen in dem ersten Pfad mit einem ersten Filter, der eine erste Filtereigenschaft aufweist, um erste geglättete Entfernungsmessungen zu bestimmen, und Filtern der Pseudoentfernungsmessungen in dem zweiten Pfad mit einem zweiten Filter (107) mit einer zweiten Filtereigenschaft, um zweite geglättete Pseudoentfernungsmessungen zu bestimmen, wobei die zweite Filtereigenschaft unterschiedlich ist zu der ersten Filtereigenschaft; und
wobei das Bestimmen, ob Spoofing auftritt, ferner Folgendes umfasst:
Vergleichen von detektierten Abweichungsunterschieden zwischen der Ausgabe in dem ersten Pfad und der Ausgabe in einem zweiten Pfad gegenüber einem vorbestimmten Schwellenwert, der angibt, dass Spoofing vorliegt.

7. Verfahren nach Anspruch 6, wobei das Bestimmen, dass Spoofing auftritt, ferner Folgendes umfasst:
Bestimmen einer Änderungsrate der Abweichung; und
Vergleichen der Änderungsrate der Abweichung mit einer vorbestimmten Änderungsrate, die angibt, dass Spoofing vorliegt.

## Revendications

1. Système (101, 200, 250) pour détecter un leurrage de signal satellite par surveillance d'une divergence anormale dans des mesures de pseudo-distance, le système (101, 200, 250) comprenant :
au moins une antenne (104) configurée pour détecter des signaux satellites (122) à partir d'une pluralité de satellites (120) ;
au moins un récepteur (103) en communication avec l'au moins une antenne (104) pour recevoir les signaux satellites (122) détectés ; et
un contrôleur (106) en communication avec l'au moins un récepteur (103), le contrôleur (103) étant configuré pour :
déterminer des mesures de pseudo-distance brutes à partir des signaux satellites (122) reçus,
appliquer un premier filtre (105) sur les mesures de pseudo-distance brutes pour générer une sortie de premières mesures de pseudo-distance filtrées,
appliquer un deuxième filtre sur les mesures de pseudo-distance brutes pour générer une sortie de deuxièmes mesures de pseudo-distance filtrées,
comparer la sortie des premières mesures de pseudo-distance filtrées avec la sortie des deuxièmes mesures de pseudo-distance filtrées, et
déterminer la présence d'un leurrage dans les signaux satellites (122) reçus sur la base d'une divergence déterminée entre la sortie de premières mesures de pseudo-distance filtrées et la sortie de deuxièmes mesures de pseudo-distance filtrées ;
dans lequel le deuxième filtre (107) présente des propriétés de filtrage différentes du premier filtre (105).

2. Système (200) selon la revendication 1, dans lequel, en outre, les différentes propriétés de filtrage incluent l'une de différentes constantes de temps et de différents taux d'échantillon.

3. Système (200) selon la revendication 1, dans lequel, en outre, au moins l'un du premier filtre (105) et du deuxième filtre (107) est configuré pour lisser les mesures de pseudo-distance brutes dans une plage delta.

4. Système (200) selon la revendication 1, dans lequel au moins l'un des premier et deuxième filtres (105 et 107) est un filtre électronique.

5. Système (200, 250) selon la revendication 1, comprenant en outre :
une mémoire (108) au moins pour stocker des instructions de fonctionnement, le contrôleur (106) en communication avec la mémoire (108) pour mettre en œuvre les instructions de fonctionnement ;
une entrée/sortie (122) en communication avec le contrôleur (106), l'entrée/sortie (112) fournissant un lien de communication entre un opérateur et le contrôleur (106) ; et
un système de navigation (110) configuré pour fournir des fonctions de navigation d'un véhicule (100) sur la base au moins en partie d'une détermination par le contrôleur (106) de la présence d'un leurrage.

6. Procédé pour déterminer si des signaux satellites reçus sont l'objet d'un leurrage, le procédé comprenant :
la détermination de mesures de pseudo-distance brutes à partir de signaux satellites (122) reçus ;
la communication des mesures de pseudo-distance brutes à un premier trajet et à un deuxième trajet ;
le lissage des mesures de pseudo-distance brutes avec un filtre (105) dans au moins l'un des premier et deuxième trajets ; et
la détermination de la survenance d'un leurrage sur la base d'une divergence détectée entre des sorties dans les premier et deuxième trajets ;
dans lequel le lissage des mesures de pseudo-distance dans au moins l'un des premier et deuxième trajets comprend en outre :
le filtrage des mesures de pseudo-distance dans le premier trajet avec un premier filtre présentant une première propriété de filtrage pour déterminer des premières mesures de distance lissées et le filtrage de mesures de pseudo-distance dans le deuxième trajet avec un deuxième filtre (107) avec une deuxième propriété de filtre pour déterminer des deuxièmes mesures de pseudo-distance lissées, dans lequel la deuxième propriété de filtre est différente de la première propriété de filtre ; et
dans lequel la détermination de la survenance d'un leurrage comprend en outre :
la comparaison de différences de divergence détectées entre la sortie dans le premier trajet et la sortie dans un deuxième trajet par rapport à un seuil prédéterminé qui indique la présence d'un leurrage.

7. Procédé selon la revendication 6, dans lequel la détermination de la survenance d'un leurrage comprend en outre :
la détermination d'un taux de variation de la divergence ; et
la comparaison du taux de variation de la divergence à un taux de variation prédéterminé qui indique la présence d'un leurrage.
